(19) Europäisches Patentamt
European Patent Office
Office européen des brevets

(11) Publication number: **0 105 742 A1**

(12) **EUROPEAN PATENT APPLICATION**

(21) Application number: 83305928.0

(51) Int. Cl.$^3$: C 09 D 9/00

(22) Date of filing: 29.09.83

(30) Priority: 30.09.82 US 429097
22.12.82 US 452065

(43) Date of publication of application:
18.04.84 Bulletin 84/16

(84) Designated Contracting States:
AT BE CH DE FR GB IT LI LU NL SE

(71) Applicant: THE FRANKLIN INSTITUTE
20th and The Benjamin Franklin Parkway
Philadelphia Pennsylvania 19103(US)

(72) Inventor: Heller, Harold L.
615 Shady Lane
Narberth Pennsylvania(US)

(74) Representative: Hale, Stephen Geoffrey et al,
J.Y. & G.W. Johnson Furnival House 14/18 High Holborn
London WC1V 6DE(GB)

(54) **Method and composition for removing organic coatings from substrates.**

(57) Organic coatings such as paints are removed from substrates by degrading them with a pasty composition comprising a polar solvent, a reagent formed by reaction of an alkali metal or alkali metal hydroxide with oxygen and a reagent of the formula

$$HO + (\overset{R^1}{\underset{R^2}{C}})_x - O]_n-R$$

where R is hydrogen or lower alkyl, $R^1$ and $R^2$ are the same or different and are each hydrogen, substituted or unsubstituted lower alkyl, substituted or unsubstituted $C_5$-$C_8$ cycloalkyl or substituted or unsubstituted aryl, n is 2-400 and x is at least 2, and usually also a finely divided particulate material, and then scraping off the degraded coating.

EP 0 105 742 A1

# Method and composition for removing organic coatings from substrates

## BACKGROUND OF THE INVENTION

The present invention relates to a composition and method for removing an organic coating from a substrate coated therewith, and more particularly for removing paint from a painted surface.

The problem of removing an organic coating from a substrate is well known. As the formulations for organic coatings have improved, their subsequent removal has become increasingly difficult. Some of the factors which influence the problem of removal are: the thickness of the coating; the type of substrate; curing time, temperature and method of application; and age of the coating.

There are several prior art methods in use for removing organic coatings. Among the methods presently in use for removing organic coatings are those involving the application of solvents, abrasives or heat to the coating material. The method selected will generally depend on a variety of factors, including the type of substrate involved and the type of coating to be removed. As discussed hereinbelow, each method has certain shortcomings, so that it is sometimes necessary to use a combination of methods to achieve substantially complete removal of the organic coating.

The most popular type of organic coating remover is the solvent-type remover. Aside from the primary solvent, these removers generally contain a co-solvent, an activator to help speed up the removal process, a thickener compatible with the blended composition, and

an evaporation retardant. Corrosion inhibitors and emulsifiers are also included in water-wash solvent-type removers. Examples of typical solvent-type removers are: (i) non-chlorinated solvents used for removing oleoresinous finishes; (ii) nitric acid solvents used for removing tough coatings verging on the hardness of porcelain, such as epoxies; (iii) chlorinated hydrocarbon solvents such as methylene chloride, which are the most widely used solvent-type removers since they are fairly efficient and thought to be relatively non-toxic; and (iv) solvents exhibiting significant hydrogen bonding such as dimethyl sulfoxide, dimethyl formamide, 2-nitropropane, tetrahydrofuran and 1,1,2-trimethoxyethane, all of which are effective for penetrating relatively impervious coatings.

Solvent-type removers have various drawbacks. In general, splattering, flowing and run down problems arise when a liquid solvent-type remover is used. Hence, paste removers have become popular even though they are somewhat slower acting. Also, most solvent-type removers, both liquid and paste, result in the formation of a sticky, paste-like, dissolved organic coating/solvent residue, and therefore, present handling and disposal problems which may necessitate further cleaning of the coated surface or surrounding areas. Furthermore, many solvent-type removers are of the water-wash type where treated surfaces are simply rinsed with large amounts of water to remove the dissolved organic coating/solvent residue. This poses a particularly troublesome problem when the organic coating is to be removed from the interior surface of a building. Moreover, because solvent-type removers are

relatively expensive, they are seldom used on large surfaces, except when it is impractical to use another of the aforementioned prior art methods. Finally, relative toxicity of certain solvent-type removers is of general concern. For example, public antipathy and recent studies on the possible health risks from exposure to chlorinated hydrocarbons, such as methylene chloride, may eventually halt the use of this material except under carefully controlled conditions.

Mechanical methods involving abrading of the coating, such as sandblasting, grinding or spraying with high pressure water are also used to remove organic coatings from substrates. Sandblasting, for instance, has been the only practical way of removing organic coatings from masonry surfaces, particularly when the surface is rough or the organic coating is an epoxy. Such mechanical methods, however, are usually expensive and often damage the substrate from which the organic coating is removed.

Heat is one of the easiest, quickest and least expensive ways to remove heavy accumulations of organic coatings from large surfaces. The organic coating is not burned off, as heat merely softens the coating so that it can be scraped off. One of the chief drawbacks of this method, however, is the danger of fire. Another disadvantage of using heat is the risk of scorching the underlying surface.

It is apparent that a need exists for an effective and efficient process for removing organic coatings, preferably one which is free from some or all of the above-mentioned drawbacks of the prior art.

## SUMMARY OF THE INVENTION

Many of the aforementioned deficiencies of the prior

art methods for organic coating removal have been overcome in accordance with the present invention wherein an organic coating is removed from a substrate by providing a composition in paste form comprising a reagent formed by reacting an alkali metal or alkali metal hydroxide, a liquid reactant which is a polyglycol or a polyglycol monoalkyl ether, and oxygen, and mixing said reagent with a compatible polar solvent and a compatible finely divided particulate material, such as mineral or cellulosic powders, to form the paste-like composition, and contacting the composition and the organic coating for a time sufficient to degrade the coating. The degraded coating and composition residue may thereafter be removed from the substrate by scraping and then rinsing with relatively small amounts of wash-water.

The reagent and solvent components of the composition appear to function symergistically to degrade organic coatings as neither component, acting alone, is particularly effective as an organic coating remover.

The present invention is particularly useful for removing paints from various painted surfaces, such as masonry, wood and other building materials. The present invention has been found to be useful on a wide variety of paints including oil and latex-based paints, alkyds, epoxies and urethanes.

The composition used in carrying out the method is made from relatively inexpensive materials and may therefore be useful on both small and large surfaces. Also, no specialized equipment is required in preparing the composition or in using it to remove organic coatings. These factors are significant from the

standpoint of application of the invention on a commercial scale.

Aside from providing a practical and effective means for removing organic coatings from masonry and other building surfaces, the present invention possesses other notable advantages. For example, the composition is easily applied with little or no flowing or run down. Also, there is no splattering during application which has been a danger and concern in connection with the application of some prior art solvent-type removers which require solvent washing of the treated surface. Moreover, the degraded coating and residual composition need not be removed within any specified time as is necessary with many prior art processes, where hardening of the residue occurs thus impeding removal. Furthermore, removal is facilitated because the degraded coating and residual composition is in a form which may be easily scraped off, swept up, and disposed of. Typical prior art solvent-type removers result in a sticky treatment residue, removal of which often necessitates further cleaning.

The present invention works particularly well on interiors of buildings since only a minimum amount of wash-water is necessary to clean the treatment residue from the treated surface. Also, the components of the composition are relatively non-toxic. Finally, the present invention is basically a one-step process whereas typical organic coating removers must be applied repeatedly depending on the thickness of the coating.

## DESCRIPTION OF THE INVENTION

In preparing the reagent component of the

composition used to remove organic coatings, any of the alkali metals or alkali metal hydroxides may be used as the first reactant. Lithium, sodium and potassium, or their hydroxides, are preferred because of their ready availability and relatively low cost. Of these, sodium or sodium hydroxide is particularly preferred because it is less expensive than the others and produces a highly reactive reagent. Mixtures of different alkali metals or alkali metal hydroxides may be used if desired.

A second reactant required for the production of the reagent component is a compound having the general formula:

$$HO\left[ \overset{R^1}{\underset{R^2}{(C)}}{}_x - O\right]_n - R$$

where R is hydrogen or lower alkyl, $R^1$ and $R^2$ are the same or different and are selected from hydrogen, unsubstituted or substituted lower alkyl, unsubstituted or substituted cycloalkyl having from 5 to 8 carbon atoms, and unsubstituted or substituted aryl, n has a value from about 2 to about 400, and x has a value of at least 2. Compounds of this type are polyglycols and polyglycol monoalkyl ethers. Representative lower alkyl radicals in the foregoing formula are methyl, ethyl, propyl, isopropyl, butyl, and isobutyl. Representative cycloalkyl radicals are cyclopentyl, cyclohexyl, cycloheptyl, and cyclooctyl. Representative aryl radicals are phenyl, benzyl, biphenyl, and naphthyl. The substituents on the $R^1$ and $R^2$ radicals include, but are not limited to,

lower alkyl, e.g. methyl, ethyl, propyl, isopropyl, butyl or isobutyl; halo, e.g. chloro or bromo; nitro; sulfato; carboxyl; amino; mono- and di-lower-alkyl amino, e.g. methylamino, ethylamino, dimethylamino or methylethylamino; amido; hydroxy; and lower alkoxy, e.g. methoxy or ethoxy.

Suitable reactants falling within the above general formula include diethylene glycol and diethylene glycol monoethyl ether, polyether glycols, such as polyethylene glycols, polypropylene glycols and polybutylene glycol and related long chain glycol monoalkyl ethers. The preferred reactants are those of the above general formula where $R^1$ and $R^2$ are hydrogen and x is 2. Particularly preferred are polyethylene glycols, i.e. polymers of formula $HO-[CH_2-CH_2-O]_nH$, having an average molecular weight range from about 100 to about 20,000. Oxygen has been determined to be a necessary third reactant for formation of the reagent component of the composition.

The optimal reagent components may be further characterized as coordination complexes containing no less than 2.0% by weight of alkali metal ions, at least one superoxide radical anion, as indicated by the occurrence of a spectral absorption when said complex is subjected to electron spin resonance spectroscopy, and at least one strongly basic nucleophilic anion, and as showing no maxima of OH stretch absorption bands above about 3000 $cm^{-1}$ when subjected to infra-red spectroscopy, unlike most primary alcohols, such as polyglycols. Such complexes are believed to be of the crown ether variety, with the residue of the polyglycol or polyglycol monoalkyl ether compound encircling the alkali metal ion.

The nucleophilic anion is believed to be an alkoxide ($RO^-$) or a hydroxide ($ROH \cdot OH^-$), where R signifies a polyglycol or polyglycol monoalkyl ether residue, and its presence may be determined by infra-red analysis. The OH stretch absorption bands for the complexes appear instead at much lower wave numbers, which is indicative of very strong hydrogen bonding in the complex and is believed to be due to the presence of the basic nucleophilic anion. As a result of this shift the intensity of the OH stretch absorption band is decreased to the point that it appears as a shoulder of the CH stretch absorption band, which generally occurs at about 2900 $cm^{-1}$. In this respect the complexes are distinguishable from simple alkali metal alcoholates.

The complexes also possess a strong electron spin resonance (E.S.R.) absorption band located at about 3,300 gauss, having a narrow band width of about 7 gauss, which demonstrates the presence of a superoxide radical. The particular spectrum matches that observed for the superoxide ion, $O_2^-$.

Once the reagent component of the composition has been formed, it is mixed with a compatible solvent i.e. one which will not react or interfere with the degrading function of the reagent. Various polar solvents are suitable for this purpose. In general, chlorinated solvents and ketones interfere with the reagent component, and therefore, must be avoided.

The term "solvent", as used herein, refers to a substance capable of penetrating the organic coating material to which the organic coating remover composition containing said solvent is applied.

The choice of solvent will generally depend on the organic coating to be removed. For example, water,

alcohols such as methyl, ethyl and isopropyl alcohols and 2-ethoxyethanol, morpholine, dimethylformamide and N-methyl-2-pyrrolidone or mixtures thereof are preferred solvents when the organic coating to be removed is paint. N-methyl-2-pyrrolidone is particularly preferred as a solvent when the organic coating to be treated is an epoxy paint. In general, the quantity of solvent used is approximately 30 to 60 percent of the total volume of solvent and reagent components. Of course, the relative proportion of solvent and reagent may be outside this range, depending on the particular solvent used and the organic coating to be removed. The solvent chosen must also be capable of forming a homogeneous composition when mixed with any other components of the composition.

The mixture of solvent and reagent is blended with a finely divided particulate material to form a paste. Suitable finely divided particulate materials include mineral powders such as clay, vermiculite, calcium carbonate and cellulosic powders (i.e. Solka-Flok®). As used herein the term "clay" refers to natural clays as well as chemically-treated clays. An example of the latter is Bentone 38®. Mineral powders which contain silica particles therein should be avoided because silica particles are known to react with the reagent component of the composition. The finely divided particulate material functions as a filler or thickening agent and, as such, allows application without splattering, run down or flowing. It also allows application of the composition in a relatively thick layer so that more of the solvent and reagent components can soak into the organic coating to be removed.

The amount of particulate material used in forming the composition must be sufficient to give it a paste-like consistency. The optimum amount will vary greatly depending on the specific particulate material selected, and can generally be determined by routine testing for application by painting, troweling or spraying.

In certain applications the particulate material may be omitted entirely, as, for example, when the coated substrate is of sufficiently small size that it can be treated by dipping in a mixture of the reagent and solvent. A typical application of this type is the removal of paint build-up from paint brushes.

Finally, wetting agents added to the composition have been found to increase the penetration rate into the coating. The wetting agent must also be compatible with the reagent component of the composition in that it must not react or interfere with the degrading function of the reagent. Fluorosurfactants have been found to be ideal wetting agents. A typical fluorosurfactant is Zonyl®, which is available from Dupont Chemical Company.

Various conventional mixing apparatus such as a high speed mixing blade may be used for blending the reagent, solvent, particulate material and wetting agent. While the above is the presently preferred way of preparing the composition of the present invention, the stated order of mixing the components is not essential to the practice of the present invention.

In practicing the method of the present invention, the composition is applied to the organic coating and is allowed to remain in contact therewith for a time sufficient to degrade the coating. The above-described composition is easily applied with a stiff brush or trowel, or by spraying on the organic coating and should be allowed to remain in contact with the coating for approximately one half hour to 24 hours before removal. The contact time required will depend on the specific organic coating to be removed as well as its age and thickness. The composition may be left in place for long periods of time without any adverse consequences. For instance it could be applied on a

Friday and readily removed on the following Monday.

After the paste has been applied for a time sufficient to degrade the organic coating, the degraded coating and residual composition is easily scraped from the surface. The scrapings are soft chips and are therefore, easily swept away. It is believed that the evaporation of the solvent component of the composition gives rise to the formation of this dry chip type residue.

Finally, after the residue has been scraped from the substrate, the substrate should be rinsed with wash-water to remove residual organic coating material present in the pores or crevices of the substrate. Recommended removal is by first scraping down to the surface and discarding the scrapings into a container. Thereafter, the surface may be washed down with water using low to medium pressure. Wash-down is facilitated if a soap, e.g. any common household dishwashing liquid, is added to the water.

The residual composition is alkaline, so skin and eyes should be protected.

The following examples further describe the manner and process of making and using the invention and sets forth the best mode contemplated for carrying out the invention, but is not to be construed as limiting the invention. Amounts indicated are by weight unless otherwise indicted.

EXAMPLE 1

The reagent component of the composition was prepared from sodium, diethylene glycol monoethylether and oxygen (hereinafter referred to as "NaDEGME") by slowly adding the molten sodium to the heated diethylene glycol monoethylether in nitrogen, and after

completion of the reaction and cooling down, bubbling oxygen through it. 4.2 kg of NaDEGME was then mixed with 4.2 kg of 2-ethoxyethanol, 0.6 kg of isopropyl alcohol and 0.6 kg of N-methyl-2- pyrrolidone. This mixture was then blended with 1.2 kg of an organic derivative of hydrous magnesium silicate materials sold under the trademark "Bentone 38" and 1.2 kg of a powdered cellulosic product sold under the trademark "Solka-Floc" to form a paste.

The paste was applied to large areas of painted sandstone (with 9 coatings ranging up to 30 years old) with stiff brushes to about 1/8 of an inch thick and allowed to stand for approximately 24 hours before removal. Removal was effected by scraping off excess paste down to the surface and discarding the scrapings by sweeping up and dumping them into a container. After removal, the surface was washed down, from top to bottom with water using low to medium pressure.

The surface when dry was essentially free from paint and had a clean, fresh appearance.

EXAMPLE 2

NaDEGME was mixed with morpholine to form a 60/40 morpholine/NaDEGME composition.

Paint brushes with significant build-up of both latex and oil-based paint were soaked in the unthickened 60/40 morpholine/NaDEGME composition for 24 hours. The brushes were thereafter washed in water and combed to remove the softened residual paint. The brushes were in nearly new condition where before treatment they were useless.

EXAMPLE 3

NaDEGME was mixed with an equal amount of water and thickened with 2/1 "Bentone 38"/Solka-Flok" to form a trowelable paste. A wetting agent (fluorosurfactant) was also added to the composition.

The paste was applied to a rough finished white marble which had been sprayed with a red enamel paint some two years before. The paste was removed after 2 hours leaving a substantially clean, unstained marble stone.

EXAMPLE 4

A paste was prepared by mixing a 2/1 methanol/NaDEGME with 2/1 "Bentone 38"/Solka-Flok".

The paste was applied to pine wood coated with an oil base paint and allowed to stand for one hour. The pine wood was scraped, brushed and washed with water.

The surface when dry was essentially free from paint and had a clean, fresh appearance.

EXAMPLE 5

A paste was prepared consisting of 41% NaDEGME, 27% ethanol, 12% morpholine, 12% "Bentone 38" and 8% "Solka-Flok".

This composition was applied to white roadway marking paint on asphalt in bright sunlight and left on for 2.5 hours. While all of the paint was softened, only about 40% was actually removed by brushing with a

bristle brush and washing with high-pressure water. The softened paint in the crevices of the asphalt was not, in effect, removable. The asphalt paving itself was unaffected by the treatment.

EXAMPLE 6

A paste was prepared in the same manner set forth in Example 5. Another paste was prepared by mixing a 2/1 N-methyl-2-pyrrolidone/NaDEGME with "Bentone 38" to form a paste-like consistency.

The above-described pastes were applied to clear urethane-coated concrete floor. Both pastes gave complete removal within 2 hours by first scraping off the excess material followed by scrubbing with a bristle brush and water.

EXAMPLE 7

A paste was prepared by mixing 32% NaDEGME, 48.9% N-methyl-2-pyrrolidone, 19% "Bentone 38" and 0.1% fluorosurfactant.

The paste was applied to an epoxy/carbon fiber composite coated with an epoxy paint. After 2 hours, the residue was scraped followed by bristle brushing and a water rinse. The epoxy paint was substantially completely removed with no damage to the underlying composite.

EXAMPLE 8

A paste was prepared by mixing 46.9% water, 12% ethyl alcohol, 24% NaDEGME, 17% "Bentone 38" and 0.1% fluorosurfactant.

The paste was applied to a metal surface coated with a) an oil-based alkyd over a zinc chromate alkyd primer; and b) a chlorinated alkyd over an epoxy/polyamide primer. The paste was left on for one hour. Excess was removed with a wooden scraper followed by simultaneously water-washing and brushing. The metal surface when dry was essentially free from paint and had a clean, fresh appearance.

EXAMPLE 9

A paste was prepared by mixing 55% methyl alcohol, 28% NaDEGME and 17% "Bentone 38".

The paste was applied to a 4 year old oil painting to selectively remove paint from portions of the canvas by a 10 minute application. Single layers of paint were also removed from the canvas in under 2 minutes. The softened paint and excess composition were simply washed away with water.

EXAMPLE 10

A paste was prepared by mixing 55% methyl alcohol, 28% NaDEGME, 16.9% "Bentone 38" and 0.1% fluorosurfactant.

The paste was applied to a white Naval aircraft urethane over primer and composite for 1.5 hours followed by scraping (with a plastic scraper) and brushing. The urethane was completely removed leaving the primer intact.

EXAMPLE 11

A paste was prepared by mixing 1/1 N-methyl-2-pyrrolidone/NaDEGME with 2/1 "Bentone 38"/Solka-Flok".

The paste was applied to an old house paint (with layers up to 64 years old) for 2 hours. All but a very old primer was removed by scraping and brushing. The primer was thereafter removed by applying for 15 minutes a paste prepared by mixing 1/1 dimethylformamide/NaDEGME with 2/1 "Bentone 38"/Solka-Flok".

CLAIMS

1. A method for the removal of an organic coating from a substrate, characterized by the steps of:

a) providing a composition in paste form comprising (i) a reagent formed by the reaction of a first reactant selected from alkali metals and alkali metal hydroxides, a second reactant having the general formula

$$HO{-}\!\!\left[\begin{matrix}R^1\\|\\(C)_x\\|\\R^2\end{matrix} - O\right]_n\!\!{-}R$$

where R is hydrogen or lower alkyl, $R^1$ and $R^2$ are the same or different and are selected from hydrogen, unsubstituted or substituted lower alkyl, unsubstituted or substituted cycloalkyl having from 5 to 8 carbon atoms, and unsubstituted or substituted aryl, n has a value from about 2 to about 400 and x has a value of at least 2, and oxygen as a third reactant, and (ii) a compatible polar solvent for softening said organic coating;

b) contacting the organic coating with the composition for a time sufficient to degrade the coating; and

c) removing the residue of the degraded coating and the composition from the substrate.

2. A composition for removing an organic coating from a substrate, characterized in that the composition is in the form of a paste and comprises

(i) a reagent formed by the reaction of a first reactant selected from alkali metals and alkali metal hydroxides, a second reactant having the general formula

$$HO{-}\!\!\left[\begin{matrix}R^1\\|\\(C)_x\\|\\R^2\end{matrix} - O\right]_n\!\!{-}R$$

where R is hydrogen or lower alkyl, $R^1$ and $R^2$ are the

same or different and are selected from hydrogen, unsubstituted or substituted lower alkyl, unsubstituted or substituted cycloalkyl having from 5 to 8 carbon atoms, and unsubstituted or substituted aryl, n has a value from about 2 to about 400 and x has a value of at least 2, and oxygen as a third reactant,

(ii) a compatible polar solvent for penetrating said organic coating, and

(iii) a compatible finely divided particulate material.

3. A composition as claimed in claim 2, characterized in that a compatible wetting agent is included in the composition.

4. A composition as claimed in claim 3, characterized in that the wetting agent is a fluorosurfactant.

5. A composition as claimed in any of claims 2 to 4, characterized in that the first reactant is selected from lithium, sodium, potassium, their hydroxides and mixtures thereof, and that in the formula set forth in claim 2 $R^1$ and $R^2$ are hydrogen and x is 2.

6. A composition as claimed in claim 5, characterized in that the first reactant is sodium and the second reactant is diethylene glycol monoethyl ether.

7. A composition as claimed in claim 5, characterized in that the first reactant is sodium and the second reactant is polyethylene glycol.

8. A composition as claimed in any of claims 2 to 7, characterized in that the solvent to be mixed with the reagent is selected from water, morpholine, 2-ethoxyethanol, methyl, ethyl and isopropyl alcohol, N-methyl-2-pyrrolidone, dimethylformamide and mixtures thereof.

9. A composition as claimed in any of claims 2 to 8, characterized in that the particulate material is selected from clay, vermiculite, calcium carbonate, cellulosic powders and mixtures thereof.

10. A method as claimed in claim 1, characterized in that the composition is a composition as claimed in any of claims 2 to 9.

11. A method as claimed in claim 1 or 10, characterized in that the organic coating is paint.

0105742

European Patent Office

# EUROPEAN SEARCH REPORT

Application number

EP 83 30 5928

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-4 337 368 (L.L. PYTLEWSKI et al.) * Column 3, lines 21-59; claims 1,2 * | 1,2,5-7 | C 09 D 9/00 |
| A | EP-A-0 060 089 (THE FRANKLIN INSTITUTE) * Page 5, line 4 - page 6, line 27; claims 11-14 * | 1,2,5 | |
| A | GB-A-2 069 522 (STERWIN AG) * Page 1, line 30 - page 3, line 51; claims 1,5,6,23,42 * | 1,2,8,9,11 | |
| A | US-A-3 615 827 (D.P. MURPHY) * Claims * | 1,5,8-11 | |
| | | | TECHNICAL FIELDS SEARCHED (Int. Cl. 3) |
| | | | C 09 D |

The present search report has been drawn up for all claims

| Place of search | Date of completion of the search | Examiner |
|---|---|---|
| THE HAGUE | 04-01-1984 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82